# EUROPEAN PATENT APPLICATION

(11) **EP 4 776 029 A1**
(43) Date of publication of application: **15.07.2026**
(21) Application number: 24862467.8
(22) Date of filing: 29.07.2024
(51) Int. Cl.: G01S 15/931

(54) **OBJECT DETECTION DEVICE**

(30) Priority: 05.09.2023 JP 2023143697
(71) Applicant: AISIN CORPORATION, Kariya-shi, Aichi 448-8650 (JP)
(72) Inventor: SHIBATA, Naoki, Kariya-shi, Aichi 448-8650 (JP); SAKIUCHI, Takuya, Kariya-shi, Aichi 448-8650 (JP); SASSA, Koichi, Kariya-shi, Aichi 448-8650 (JP)
(74) Representative: TBK
(86) International application number: PCT/JP2024/027019
(87) International publication number: WO 2025/052811

(57) **Abstract**

An object detection device includes: an acquisition unit that acquires distance information indicating a distance from a transmission-reception unit mounted on a vehicle to an object by performing communication with the transmission-reception unit, based on a time until a sound wave transmitted from the transmission-reception unit is reflected by the object and returns; a communication interruption setting unit that sets an interruption timing at which communication processing between the transmission-reception unit and the acquisition unit is temporarily interrupted based on at least one of a relationship between a detection setting distance in a detection scene of the object and communication noise due to the communication and a relationship between road surface noise determined by a mounting height of the transmission-reception unit from a road surface and the communication noise; and a communication resumption setting unit that enables the communication processing to be resumed after a predetermined interruption period has elapsed since the interruption of the communication processing or after an interruption period determined based on previously acquired distance information to the object has elapsed.

## Description

### TECHNICAL FIELD

The present disclosure relates to an object detection device.

### BACKGROUND ART

Conventionally, there is known an object detection device that detects information about an object, for example, a distance to the object by transmitting, as a transmission wave, a sound wave such as an ultrasonic wave and receiving a reception wave as the transmission wave having returned after being reflected by the object. In such an object detection device, a type of object detection device has been proposed in which a detection cycle of an object is shortened by performing communication for acquiring measurement data from a transceiver (sensor) during measurement of an ultrasonic wave.

### CITATIONS LIST

### PATENT LITERATURE

Patent Literature 1: JP 2015-90268 A

### SUMMARY OF INVENTION

### TECHNICAL PROBLEMS

However, in the case of object detection (distance detection to an object) using a sound wave such as an ultrasonic wave, there has been the following problem. An intensity level of a reflected wave (reception wave) from the object becomes weaker as the object is farther; therefore, the reflected wave is buried in a constantly existing communication noise, so that it is difficult to identify the reflected wave, and detection accuracy of the object may be deteriorated.

Therefore, an embodiment of the present invention provides an object detection device capable of reducing an influence of the communication noise and improving the object detection accuracy.

### SOLUTIONS TO PROBLEMS

An object detection device as one example of the present disclosure includes: an acquisition unit that acquires distance information indicating a distance from a transmission-reception unit mounted on a vehicle to an object by performing communication with the transmission-reception unit, based on a time until a sound wave transmitted from the transmission-reception unit is reflected by the object and returns; a communication interruption setting unit that sets an interruption timing at which communication processing between the transmission-reception unit and the acquisition unit is temporarily interrupted based on at least one of a relationship between a detection setting distance in a detection scene of the object and communication noise due to the communication and a relationship between road surface noise determined by a mounting height of the transmission-reception unit from a road surface and the communication noise; and a communication resumption setting unit that enables the communication processing to be resumed after a predetermined interruption period has elapsed since the interruption of the communication processing or after an interruption period determined based on previously acquired distance information to the object has elapsed.

According to the above configuration, for example, by once temporarily interrupting the communication processing after start of the communication processing, it is possible to suppress the communication noise for an area where an intensity of the reflected wave becomes weak, for example, for a distant area. Then, after the communication is resumed, it is possible to acquire the distance information in the period in which no communication noise affected; therefore, the object detection can be performed in a state in which the S/N ratio is improved.

### BRIEF DESCRIPTION OF DRAWINGS

FIG. 1 is an exemplary and schematic diagram of a vehicle on which an object detection device according to an embodiment can be mounted, and is a view as viewed from above.
FIG. 2 is an exemplary and schematic block diagram illustrating a rough hardware configuration of a vehicle control device including the object detection device according to the embodiment.
FIG. 3 is an exemplary and schematic block diagram illustrating a functional configuration of the object detection device according to the embodiment.
FIG. 4 is an exemplary and schematic diagram illustrating an installation position of a transmission-reception unit used in the object detection device according to the embodiment.
FIG. 5 is an exemplary and schematic diagram illustrating an interruption timing and a resumption timing of communication processing of the object detection device according to the embodiment.
FIG. 6 is an exemplary and schematic diagram illustrating a relationship between noises (road surface noise and communication noise) and a reflection level of a reflected wave in the object detection device according to the embodiment.
FIG. 7 is an exemplary flowchart illustrating a flow of communication interruption processing in the object detection device according to the embodiment.
FIG. 8 is an exemplary and schematic diagram illustrating another determination mode for a communication resumption timing of the object detection device according to the embodiment.

### DESCRIPTION OF EMBODIMENTS

Hereinafter, embodiments and modified examples of the present disclosure will be described with reference to the drawings. The configurations of the embodiment and the modified examples described below and the actions and effects provided by the configurations are merely examples and are not limited to the content described below.

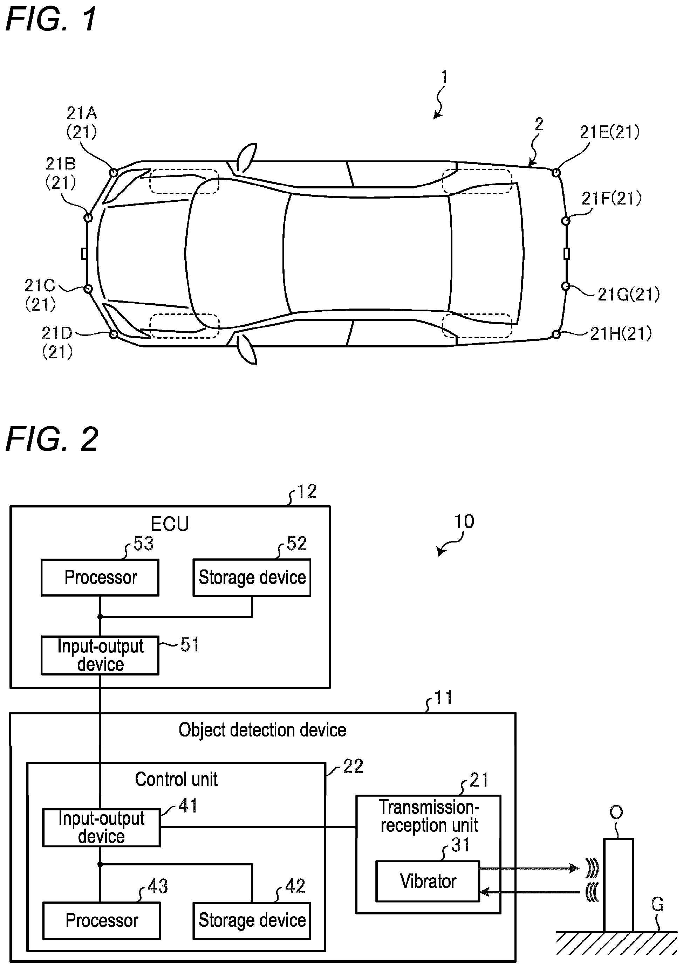

FIG. 1 is an exemplary and schematic diagram of a vehicle 1 on which an object detection device according to the embodiment can be mounted, and is a view as viewed from above.

The object detection device according to the present embodiment is a device that detects an object present around the vehicle 1 on the basis of, for example, a time of flight (TOF), Doppler shift information, and the like acquired by transmitting an ultrasonic wave from a transmission-reception unit 21 of the vehicle 1 and receiving a reflected wave from the object.

The object detection device according to the present embodiment includes a plurality of transmission-reception units 21A to 21H (hereinafter, the plurality of transmission-reception units 21A to 21H will be each abbreviated as the transmission-reception unit 21 when it is not necessary to distinguish between the transmission-reception units 21A to 21H). Each transmission-reception unit 21 is installed in a vehicle body 2 as an exterior of the vehicle 1, transmits an ultrasonic wave (transmission wave) toward the outside of the vehicle body 2, and receives a reflected wave from an object present around the vehicle body 2. In an example illustrated in FIG. 1, the plurality of (four as an example) transmission-reception units 21A to 21D are disposed at a front end portion of the vehicle body 2, and the plurality of (for example, four) transmission-reception units 21E to 21H are disposed at a rear end portion. The plurality of transmission-reception units 21A to 21D are at different positions in the width direction of the vehicle 1. Furthermore, the plurality of transmission-reception units 21E to 21H are at different positions in the width direction of the vehicle 1. Note that the number and installation positions of the transmission-reception units 21 are not limited to the above example.

FIG. 2 is an exemplary and schematic block diagram illustrating a rough hardware configuration of a vehicle control device 10 including the object detection device 11 according to the embodiment. The vehicle control device 10 includes the object detection device 11 and an electronic control unit (ECU) 12. The vehicle control device 10 performs processing for controlling the vehicle 1 on the basis of information output from the object detection device 11.

The object detection device 11 includes the plurality of transmission-reception units 21 (only one is illustrated as a representative in FIG. 2) and a control unit 22. Each transmission-reception unit 21 includes a vibrator 31 configured using a piezoelectric element or the like, an amplifier, and the like, and realizes transmission and reception of an ultrasonic wave on the basis of vibration of the vibrator 31. Specifically, each transmission-reception unit 21 transmits an ultrasonic wave generated corresponding to vibration of the vibrator 31 as a transmission wave, and detects vibration of the vibrator 31 caused by a reflected wave of the transmission wave reflected by an object O. The object O includes an object O with which the vehicle 1 should avoid coming into contact and a road surface G on which the vehicle 1 travels. The vibration of the vibrator 31 is converted into an electric signal, and on the basis of the electric signal, it is possible to acquire echo information indicating a temporal change in an intensity (amplitude) of the reflected wave from the object O. On the basis of the echo information, it is possible to acquire a TOF or the like corresponding to a distance from the transmission-reception unit 21 (the vehicle body 2) to the object O.

The echo information may be generated on the basis of data acquired by a single transmission-reception unit 21, or may be generated on the basis of a plurality of pieces of data acquired by a plurality of transmission-reception units 21. For example, the echo information about the object O present in front of the vehicle body 2 may be generated based on two or more pieces of data (for example, an average value) acquired by two or more of the four transmission-reception units 21A to 21D (see FIG. 1) disposed on the front portion of the vehicle body 2. Similarly, the echo information about the object O present behind the vehicle body 2 may be generated based on two or more pieces of data acquired by two or more of the four transmission-reception units 21E to 21H (see FIG. 1) disposed on the rear portion of the vehicle body 2.

Note that, in the example illustrated in FIG. 2, a configuration in which transmission of a transmission wave and reception of a reflected wave are both performed using a single vibrator 31 is exemplified, but the configuration of the transmission-reception units 21 is not limited to this example. For example, like a configuration in which a vibrator for transmitting a transmission wave and a vibrator for receiving a reflected wave are separately provided, the transmission side and the reception side may be separated.

The control unit 22 includes an input-output device 41, a storage device 42, and a processor 43. The input-output device 41 is an interface device to realize transmission and reception of information between the control unit 22 and the outside (the transmission-reception unit 21 and the ECU 12). The storage device 42 includes a main storage device such as a read only memory (ROM) or a random access memory (RAM) and an auxiliary storage device such as a hard disk drive (HDD) or a solid state drive (SSD). The processor 43 is an integrated circuit that performs various types of processing for realizing functions of the control unit 22, and includes, for example, a central processing unit (CPU) that operates according to a program, an application specific integrated circuit (ASIC) designed for a specific application, and the like. The processor 43 performs various types of arithmetic processing and control processing by reading a program stored in the storage device 42 and executing the program. Details of the functions implemented by the processor 43 will be described later.

The ECU 12 is a unit that executes various types of processing for controlling the vehicle 1 on the basis of various types of information acquired from the object detection device 11 and the like. The ECU 12 includes an input-output device 51, a storage device 52, and a processor 53. The input-output device 51 is an interface device for realizing transmission and reception of information between the ECU 12 and external mechanisms (the object detection device 11, a drive mechanism, a brake mechanism, a steering mechanism, a shift mechanism, an in-vehicle display, a speaker, and the like.). The storage device 52 includes: a main storage device such as a ROM and a RAM; and an auxiliary storage device such as an HDD or an SSD. The processor 53 is an integrated circuit that performs various types of processing for realizing functions of the ECU 12, and includes, for example, a CPU, an ASIC, and the like. The processor 53 reads a program stored in the storage device 52 and performs various arithmetic processing and control processing.

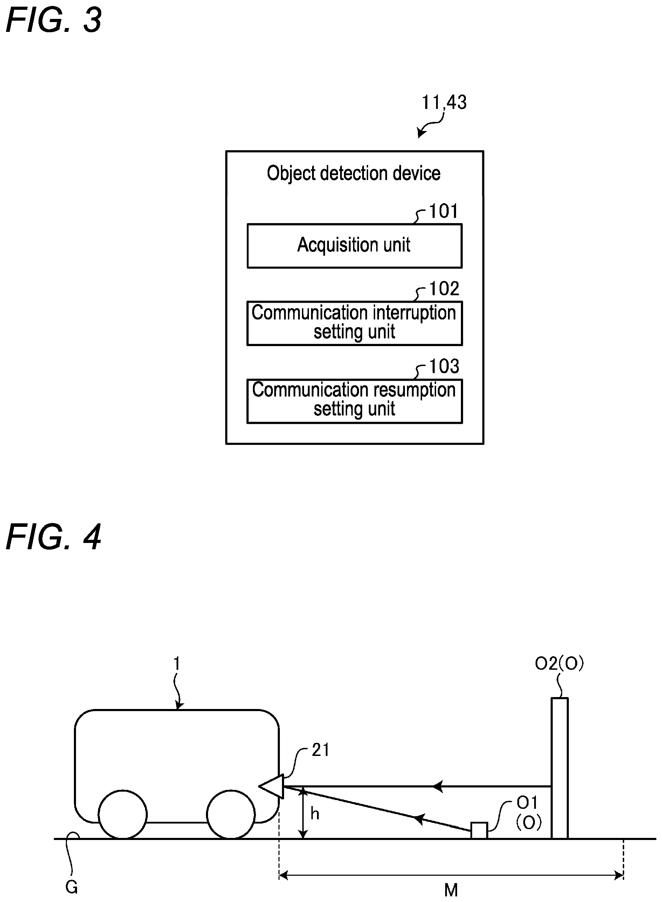

FIG. 3 is a block diagram illustrating an example of a functional configuration of the object detection device 11 according to the embodiment. The object detection device 11 according to the present embodiment includes an acquisition unit 101, a communication interruption setting unit 102, and a communication resumption setting unit 103. The acquisition unit 101, the communication interruption setting unit 102, and the communication resumption setting unit 103 may be realized by the processor 43 reading and executing the program stored in the storage device 42 as described above, or may be configured by dedicated hardware.

As described above, by communicating with the transmission-reception unit 21, the acquisition unit 101 acquires distance information (measurement data) that indicates, based on a time until a sound wave transmitted from the transmission-reception unit 21 mounted on the vehicle 1 is returned after being reflected by the object O, the distance from the transmission-reception unit 21 (the vehicle 1) to the object O. The transmission-reception unit 21 constantly transmits and receives ultrasonic waves and acquires distance information in a situation where the object O needs to be detected, for example, when the vehicle 1 is traveling and when the vehicle 1 is stationary but in a travelable state. The transmission-reception unit 21 temporarily stores the received reflected waves (distance information and echo information) sequentially in a storage unit (not illustrated), and sequentially transmits the received reflected waves to the control unit 22.

On the basis of at least one of the following relationships, the communication interruption setting unit 102 sets an interruption timing at which communication processing between the transmission-reception unit and the acquisition unit is temporarily interrupted. A relationship between a detection setting distance M (for example, 3 m ahead of the vehicle 1) in a detection scene of the object O (for example, a contact prevention scene at the time of parking assistance) and communication noise due to communication, and a relationship between a road surface noise determined based on a mounting height h of the transmission-reception unit 21 from the road surface G and communication noise. The interruption timing can be set in advance by a test or the like.

Then, the communication resumption setting unit 103 enables the communication processing to be resumed after a predetermined interruption period has elapsed since the communication processing is interrupted by the communication interruption setting unit 102. A communication resumption timing can be set in advance by a test or the like.

In the transmission-reception unit 21, the reflected wave that is reflected by the object O has a stronger intensity (reception level) as the distance from the transmission-reception unit 21 to the object O is shorter. That is, the farther the object O is, the more the intensity of the reflected wave is attenuated. Meanwhile, the transmission-reception unit 21 has a constant noise due to thermal noise (noise caused by irregular thermal vibration [Brownian motion] of free electrons in a resistor) generated when resistance elements and the like constituting the transmission-reception unit 21 operate. In addition, when the distance information is transmitted from the transmission-reception unit 21 to the control unit 22, a certain level of communication noise is generated from the transmission-reception unit 21. As a result, for example, an attenuated reflected wave obtained in a case where the object O is distantly located is buried in the communication noise, and the distance information may be difficult to determine. Therefore, the communication interruption setting unit 102 temporarily interrupts the communication processing at a timing of receiving the reflected wave from the object O at a predetermined distance away from the transmission-reception unit 21. As a result, the generation of the communication noise can be eliminated, and the reflected wave received by the transmission-reception unit 21 can be prevented from being buried in the communication noise and from being difficult to be determined.

As described above, the interruption timing to interrupt the communication processing can be set in advance according to the relationship between the detection setting distance M and the communication noise. The detection of the object O differs depending on the control contents of the vehicle 1. As a use example of the distance information to the object O, for example, in the case of the contact prevention scene at the time of parking assistance, the detection setting distance M can be handled as long as the object O can be detected at, for example, a position 3 m ahead of the vehicle 1. In this case, for example, when an area where the intensity of the reflected wave is stronger than the intensity of the communication noise (for example, up to 2 m) is defined as the short distance, the reflected wave can be sufficiently identified within this area even when the reception processing of the reflected wave and the communication processing of transmitting the measurement data (distance information) of the reflected wave to the control unit 22 are simultaneously performed. On the other hand, for example, an area where the intensity of the reflected wave is weaker than the intensity of the communication noise (for example, 2 m or more) is defined as the long distance, and in this area, the communication processing is interrupted, only the reception processing of the reflected wave is performed, and the measurement data (the distance information) of the reflected wave in a state where the communication noise is eliminated is temporarily stored in the storage unit. At the time of the communication processing that is resumed by the communication resumption setting unit 103, for example, after a predetermined interruption period has elapsed since the communication processing is interrupted, the temporarily stored measurement data of the reflected wave is acquired as the measurement data of the reflected wave in a state where the communication noise is eliminated. As a result, the measurement data of the reflected wave not including the communication noise (not buried) can be supplied to the control unit 22. That is, the communication processing is interrupted when a range that can be considered as the short distance in the detection setting distance M is finished, and the communication processing is resumed when the farthest position (area) where the object O needs to be detected in the detection setting distance M is reached.

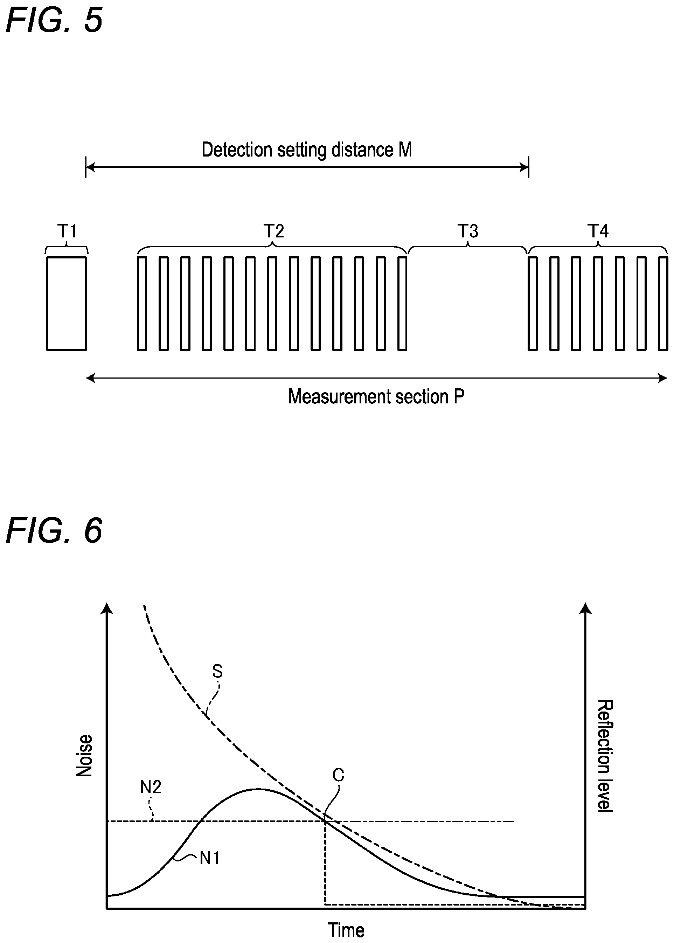

FIG. 5 is an exemplary and schematic diagram illustrating the interruption timing and the resumption timing of the communication processing of the object detection device 11. As illustrated in FIG. 5, measurement by the transmission and reception by the transmission-reception unit 21 is started in a section T1, and measurement data (information of the reflected wave) is acquired in a section T2. The section T2 corresponds to the short distance from the transmission-reception unit 21, and a reflection intensity level when the object O is present is relatively strong, so that the reflected wave can be easily identified even when the communication noise is being generated. On the other hand, a section T3 corresponds to the long distance from the transmission-reception unit 21 within the detection setting distance M, the reflection intensity level when the object O is present is relatively weak (attenuated), and when the communication noise is generated, the reflected wave may be buried in the communication noise. Therefore, in this section T3, the communication is interrupted and the generation of the communication noise is eliminated. Then, the communication processing is resumed in a section T4 to acquire the measurement data received by the transmission-reception unit 21 in the section T3 and the measurement data (the measurement data having a relatively weak reflection intensity level) sufficient to detect the presence or absence of the object O at a distance farther than the detection setting distance M. Note that a length of the section T4 after the communication is resumed can be determined based on a measurement section P that can be set in advance. After the measurement of the measurement section P is finished, the procedure shifts to a new transmission-reception cycle (next detection cycle) by the transmission-reception unit 21, and similar communication processing, interruption processing, and communication resumption processing are repeatedly performed, so that the detection processing of the object O can be continuously performed.

In another embodiment, the interruption timing of the communication processing of the object detection device 11 may be determined based on a relationship between the mounting height h (see FIG. 4) of the transmission-reception unit 21 from the road surface G and the communication noise. FIG. 6 is an exemplary and schematic diagram illustrating a relationship between noise (a road surface noise N1 [solid line], a communication noise N2 [the broken line indicates the case of interruption, and the two-dot chain line indicates the case of no interruption) and a reflection level of a reflected wave S (one-dot chain line) in the object detection device 11. The road surface noise N1 is a noise that changes depending on a state of the road surface G (a type, smoothness, and the like of the road surface), but as illustrated in FIG. 6, the road surface noise N1 tends to attenuate as the distance from the transmission-reception unit 21 increases. Furthermore, the road surface noise N1 changes depending on the mounting height h of the transmission-reception unit 21 from the road surface G. That is, an influence of the road surface noise N1 decreases as the mounting height h increases. In addition, the communication noise N2 has a constant value as described above; therefore, by interrupting the communication processing to eliminate the communication noise N2 at an intersection C of the communication noise N2 and the road surface noise N1 in an area where the road surface noise N1 is attenuated, it is possible to prevent the attenuating reflected wave S from being buried in the communication noise N2 and becoming difficult to identify.

Furthermore, in another embodiment, the communication interruption setting unit 102 may determine the interruption timing of the communication processing of the object detection device 11 on the basis of the number of times the object O is detected at the short distance. For example, the communication interruption setting unit 102 may interrupt the communication processing when the object O is detected at the short distance. However, in this case, as illustrated in FIG. 4, there may be the following case. At a position closer to the vehicle 1, there is a small object O1 considered not to affect the traveling of the vehicle 1, and behind the small object O1, there is a large object O2 considered to affect the traveling of the vehicle 1. In such a case, when the communication processing is interrupted when the object O1 is detected, the measurement data corresponding to the object O2 is acquired after the communication is resumed; therefore, the recognition timing of the object O2 may be delayed. Therefore, the communication interruption setting unit 102 may interrupt the communication processing in the following case. The number of times the object O is detected at the short distance that is before the interruption of the communication processing becomes a plurality of times (for example, at least twice or more). Also in this case, the object O that can be present at the long distance within the detection setting distance M can be detected without being affected by the communication noise. As a result, it is possible to prevent the attenuating reflected wave from being buried in the communication noise and being difficult to identify.

Note that when the distance information considered to indicate the object O is acquired at a timing before the interruption timing, the communication interruption setting unit 102 may interrupt the communication processing of the current processing cycle of the acquisition unit 101 and cause the acquisition unit 101 to start the communication processing of the next processing cycle regardless of the interruption timing set in advance. That is, in a case where the object O is detected in the vehicle 1 (the transmission-reception unit 21) at the short distance, the highest priority is given to handling (contact prevention or the like) of the object O; therefore, the importance of the information of another object O located farther than the object O becomes low. Therefore, in a case where the object O is detected at the short distance within the detection setting distance M, the communication processing is interrupted, and the communication processing of the next processing cycle by the acquisition unit 101 is started. That is, the process for the transmission wave performed by the transmission-reception unit 21 this time is ended, and the process proceeds to the processing for the next transmission wave by the transmission-reception unit 21. As a result, unnecessary measurement processing for the long distance can be omitted. As a result, the detection cycle of the object O can be compressed (shortened), which contributes to improvement of the detection reliability of the object O. In this case, when one or both of the object O and the vehicle 1 are moving in the approaching direction, the timing of the end of communication (the timing to shift to the next detection cycle) is advanced every time the above-described ending of detection is performed, so that the detection cycle is further compressed.

Furthermore, in a case where the distance information (the measurement data) considered to indicate the object O is not acquired in the predetermined confirmation period after the communication processing is resumed, the communication resumption setting unit 103 may interrupt the resumed communication processing and start the communication processing of the next processing cycle by the acquisition unit 101. When the communication resumption setting unit 103 resumes the communication processing, the measurement data in the section T3 in which the communication processing was interrupted is first transmitted to the control unit 22. That is, it is possible to determine whether the object O is present in an area that corresponds to the long distance from the transmission-reception unit 21 within the detection setting distance M and in which detection is necessary. In other words, in a case where the object O is not present in an area corresponding to the long distance from the transmission-reception unit 21 within the detection setting distance M, the importance of the detection of the object O in an area farther than the above area becomes low. Therefore, in a case where the distance information (the measurement data) considered to indicate the object O is not acquired in the first predetermined confirmation period after the communication processing is resumed, the communication resumption setting unit 103 interrupts the resumed communication processing and starts the communication processing of the next processing cycle by the acquisition unit 101. Also in this case, the processing can be omitted in an area having a lower importance, and this can contribute to compression (shortening) of the detection cycle.

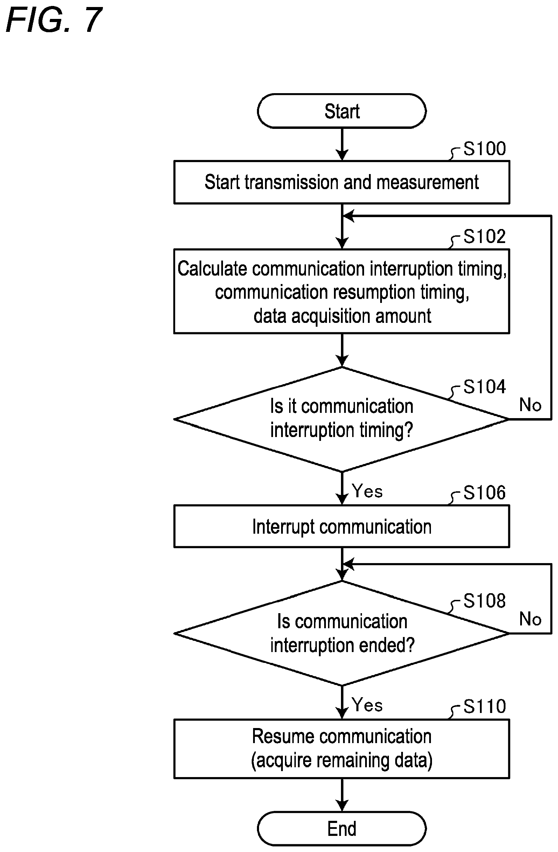

A flow of communication interruption processing of the object detection device 11 configured as described above will be described with reference to an exemplary flowchart FIG. 7.

First, in the vehicle control device 10, when a request for detecting the object O (a request for starting a detection cycle) is issued, the transmission-reception unit 21 starts transmission and measurement of an ultrasonic wave, and the acquisition unit 101 starts to acquire measurement data (distance information). That is, communication processing with the transmission-reception unit 21 is started, and acquisition of the measurement data is started (step S100).

When the measurement is started, the communication interruption setting unit 102 acquires the communication interruption timing, and the communication resumption setting unit 103 acquires the communication resumption timing. In addition, the acquisition unit 101 calculates a measurement data acquisition amount that can be acquired by the communication interruption timing (step S102). Then, the communication interruption setting unit 102 monitors whether it is the communication interruption timing (S104). When it is not yet the communication interruption timing (step S104: No), the process returns to step S102 to continue the monitoring whether it is the communication interruption timing while confirming the communication interruption timing, the communication resumption timing, and the data acquisition amount. When it is the communication interruption timing (step S104: Yes), the communication between the acquisition unit 101 and the transmission-reception unit 21 is temporarily interrupted (step S106). That is, the measurement data received by the transmission-reception unit 21 during the interruption of the communication processing is data not including the communication noise. Note that the communication interruption setting unit 102 may set periods of start and end (resumption of communication) of the communication interruption processing. That is, the communication interruption setting unit 102 may acquire the communication interruption timing and the communication resumption timing.

When the interruption of the communication processing is started, the communication resumption setting unit 103 monitors whether the communication interruption is ended, that is, whether it is the communication resumption timing (step S108: No). When it is determined that the communication interruption is completed (step S108: Yes), the communication resumption setting unit 103 resumes the communication between the acquisition unit 101 and the transmission-reception unit 21 and acquires remaining data (including the measurement data received by the transmission-reception unit 21 during the interruption) (step S110), and once ends the processing of the current detection cycle. Then, when the next detection cycle has come, the process from step S100 is performed, and the measurement data acquisition process including the interruption of the communication processing is performed. Thereafter, the flow of FIG. 7 is repeatedly performed to continuously perform the detection processing of the object O.

Note that, the above-described embodiment has described an example in which the communication resumption timing is set in advance by a test or the like. In another embodiment, the communication resumption timing may be determined using a past detection result of the transmission-reception unit 21. For example, in a case where approaching of the object O is predicted from a plurality of past detection results (detection distances) and it is estimated that the predicted object O is present in the section T3, the communication interruption is ended at a timing sufficient to detect the predicted object O. That is, the communication interruption time (the section T3) may be shortened to advance the communication resumption timing.

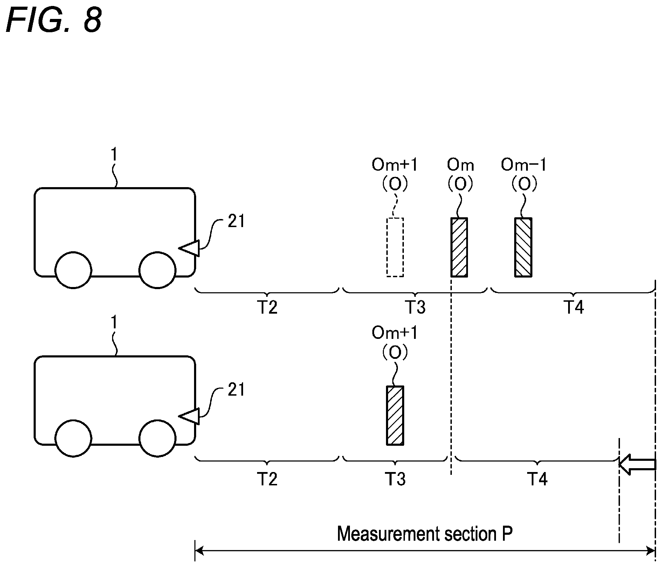

For example, as illustrated in FIG. 8, when an object Om-1 is detected in the section T4 in the previous detection cycle and an object Om is detected in the section T3 in the current detection cycle, it can be considered that the object O is approaching the transmission-reception unit 21. Therefore, it can be predicted that an object Om+1 at the next detection timing is detected at a position closer to the transmission-reception unit 21 in the section T3. In this case, in the section T3, the distance information of the approaching object Om+1 (O), which has a high detection importance, is acquired in a state where the communication noise is suppressed due to the communication interruption. On the other hand, when a closest approaching object can be detected, an object that can be present farther than the closest object can be considered to have a lower importance in the contact prevention scene at the time of parking assistance or another scene. That is, when the presence or absence of an object can be detected, it can be considered that accurate distance information is not important. Therefore, a communication interruption section (the section T3) in which the communication noise in the next detection cycle is suppressed is shortened based on the distance information of the past detection result (the object Om or the like) to advance the communication resumption timing. That is, the communication resumption setting unit 103 enables the communication processing to be resumed after elapsing of the interruption period determined based on the distance information to the object O acquired in the past. In this case, the communication resumption timing may be determined based on, for example, the detection distance of the object Om, or may be determined based on the detection distance of the object Om and an estimated detection distance of the object Om+1 for the next cycle in consideration of a prediction error. FIG. 8 illustrates an example in which the communication resumption timing is determined based on the detection distance of the object Om that is already subjected to a postmortem. As a result, it is possible to advance the termination of the communication interruption in the entire next detection cycle and contribute to the compression (shortening) of the detection cycle. By repeating such a shortening process of the communication interruption period, the entire detection cycle can be shortened, and the object detection accuracy can be improved.

Furthermore, as another embodiment, the communication start timing may be determined on the basis of, for example, the reflection level of the object. For example, in a case where there is the object O having a reflection level large enough not to be buried in the communication noise on the basis of a plurality of past reflection intensity levels of the object O, the communication resumption timing may be set to a timing immediately after the end of the section T2. That is, the communication interruption period may be minimized (in a state where the communication interruption is as close to zero as possible), and the measurement may be continued while substantially performing communication as usual. This case can also contribute to shortening of the entire detection cycle and improve the object detection accuracy.

Note that, in the present embodiment, the communication interruption timing and the communication resumption timing may be determined during the section T1 or may be determined during the section T2.

Meanwhile, in the present embodiment, the acquisition unit 101 may acquire, as the information communicated with the transmission-reception unit 21, various types of additional data in addition to the measurement data (the distance information) of the reflected wave as described above. The acquisition unit 101 may acquire, as the additional information, sensor failure information or abnormality information of the transmission-reception unit 21 (sensor), information regarding data reliability, and the like, for example. In a case where various types of additional data are acquired in addition to the measurement data in this manner, when the communication processing is interrupted in order to suppress the communication noise (improve the detection accuracy of the object O) as described above, the communication of the additional data is also interrupted although the interruption is for a short time.

Here, the following case will be considered. The object detection device 11 of the present embodiment can detect the object O at the short distance, that is, for example, it is detected that the object O is present in the section T2 (that is, at the short distance) as a result of acquiring the measurement data in the section T2 in FIG. 5. In this case, as described above, it can be considered that an object that can be present farther than the object O detected at the short distance has a lower importance in a scene such as a parking assistance. That is, it can be considered that the necessity of the communication noise suppression processing is lower in the area farther than the detected object O.

Therefore, when the distance information (the measurement data) considered to indicate an object is acquired at a timing before the interruption timing of the communication processing, the communication interruption setting unit 102 may continue the communication processing between the transmission-reception unit 21 and the acquisition unit 101 regardless of the interruption timing. For example, in FIG. 5, in a case where the presence of the object O is detected in the section T2 (that is, the short distance) as a result of acquiring the measurement data in the section T2, the communication interruption setting unit 102 does not interrupt the communication processing and continues the communication processing. In a case where the presence of the object O is detected at such an early stage, the communication interruption setting unit 102 continues the communication processing without performing the interruption processing, so that it is possible to continue the communication processing of the above-described various types of auxiliary data. As a result, the object detection device 11 can continuously acquire the auxiliary data while satisfactorily detecting the object O, and can therefore perform operation management and administration of itself (the object detection device 11) in the same manner as before.

As described above, according to the present embodiment, an object detection device 11 includes: an acquisition unit 101 that acquires distance information indicating a distance from a transmission-reception unit 21 mounted on a vehicle 1 to an object O by performing communication with the transmission-reception unit 21, based on a time until a sound wave transmitted from the transmission-reception unit 21 is reflected by the object O and returns; a communication interruption setting unit 102 that sets an interruption timing at which communication processing between the transmission-reception unit 21 and the acquisition unit 101 is temporarily interrupted based on at least one of a relationship between a detection setting distance M in a detection scene of the object O and communication noise N2 due to the communication and a relationship between road surface noise N1 determined by a mounting height h of the transmission-reception unit 21 from a road surface G and the communication noise N2; and a communication resumption setting unit 103 that enables the communication processing to be resumed after a predetermined interruption period has elapsed since the interruption of the communication processing or after an interruption period determined based on previously acquired distance information to the object O has elapsed. According to this configuration, for example, by once temporarily interrupting the communication processing after the communication processing is started, it is possible to suppress the communication noise N2 in an area where the intensity of the reflected wave is weakened, for example, in a distant area. Then, after the communication is resumed, it is possible to acquire the distance information in the period in which no communication noise N2 affected; therefore, the object detection can be performed in a state in which an S/N ratio was improved.

Furthermore, in the above embodiment, when the distance information considered to indicate the object O is acquired at a timing before the interruption timing, the communication interruption setting unit 102 may continue the communication processing between the transmission-reception unit 21 and the acquisition unit 101 regardless of the interruption timing. According to this configuration, for example, in a case where the object O is detected at the short distance within the detection setting distance M, that is, in a case where the presence of the object O is detected at an early stage, the communication processing is continued without being interrupted. By continuing the communication processing, the object detection device 11 can continuously acquire auxiliary data while satisfactorily detecting the object O, and can perform operation management of the object detection device 11 and administration on the basis of the acquired auxiliary data in the same manner as before. As a result, it is possible to contribute to improvement of the detection reliability of the object O of the object detection device 11.

Furthermore, in the above embodiment, when the distance information considered to indicate the object O is acquired at a timing before the interruption timing, the communication interruption setting unit 102 may interrupt the communication processing of the current processing cycle of the acquisition unit 101 and cause the acquisition unit 101 to start the communication processing of the next processing cycle regardless of the interruption timing. In a case where the object O is detected at the short distance within the detection setting distance M, the communication processing is interrupted, and the communication processing of the next processing cycle by the acquisition unit 101 is started. That is, the process for the transmission wave performed by the transmission-reception unit 21 this time is ended, and the process proceeds to the processing for the next transmission wave by the transmission-reception unit 21. That is, unnecessary measurement processing for the long distance can be omitted. As a result, the detection cycle of the object O can be compressed (shortened), which contributes to improvement of the detection reliability of the object O. According to this configuration, for example, in a case where the object O is detected at the short distance within the detection setting distance M, the communication processing is interrupted, and the communication processing of the next processing cycle by the acquisition unit 101 is started. That is, the process for the transmission wave performed by the transmission-reception unit 21 this time is ended, and the process proceeds to the processing for the next transmission wave by the transmission-reception unit 21. As a result, unnecessary measurement processing for the long distance can be omitted. As a result, the detection cycle of the object O can be compressed (shortened), which contributes to improvement of the detection reliability of the object O.

Furthermore, in the above embodiment, in a case where the distance information considered to indicate the object O is not acquired in the predetermined confirmation period after the communication processing is resumed, the communication resumption setting unit 103 may interrupt the resumed communication processing and start the communication processing of the next processing cycle by the acquisition unit 101. According to this configuration, for example, in a case where the object O is not present in an area corresponding to the long distance from the transmission-reception unit 21 within the detection setting distance M, the importance of the detection of the object O in an area farther than the above area becomes low. Therefore, in a case where the distance information considered to indicate the object O is not acquired in the first predetermined confirmation period after the communication processing is resumed, the communication resumption setting unit 103 interrupts the resumed communication processing and starts the communication processing of the next processing cycle by the acquisition unit 101. In this case, the processing can be omitted in an area having a lower importance, and this can contribute to compression (shortening) of the detection cycle.

In the above, the embodiments and the modified examples of the present disclosure have been described; however, the above-mentioned embodiments and the modified examples are merely examples and are not intended to limit the scope of the invention. The above-mentioned novel embodiments and the modified examples can be performed in various aspects; and various omissions, substitutions, and changes can be made without departing from the gist of the invention. The above-mentioned embodiments and modified examples are included in the scope and gist of the invention and are included in the invention described in the claims and in the scope of equivalents of the claims.

### REFERENCE SIGNS LIST

1: Vehicle, 10: Vehicle control device, 11: Object detection device, 12: ECU, 21: Transmission-reception unit, 22: Control unit, 53: Processor, 101: Acquisition unit, 102: Communication interruption setting unit, and 103: Communication resumption setting unit

## Claims

1. An object detection device comprising:
an acquisition unit that acquires distance information indicating a distance from a transmission-reception unit mounted on a vehicle to an object by performing communication with the transmission-reception unit, based on a time until a sound wave transmitted from the transmission-reception unit is reflected by the object and returns;
a communication interruption setting unit that sets an interruption timing at which communication processing between the transmission-reception unit and the acquisition unit is temporarily interrupted based on at least one of a relationship between a detection setting distance in a detection scene of the object and communication noise due to the communication and a relationship between road surface noise determined by a mounting height of the transmission-reception unit from a road surface and the communication noise; and
a communication resumption setting unit that enables the communication processing to be resumed after a predetermined interruption period has elapsed since the interruption of the communication processing or after an interruption period determined based on previously acquired distance information to the object has elapsed.

2. The object detection device according to claim 1, wherein when the distance information considered to indicate the object is acquired at a timing before the interruption timing, the communication interruption setting unit continues the communication processing between the transmission-reception unit and the acquisition unit regardless of the interruption timing.

3. The object detection device according to claim 1, wherein when the distance information considered to indicate the object is acquired at a timing before the interruption timing, the communication interruption setting unit interrupts the communication processing of the acquisition unit in a current processing cycle and starts the communication processing of the acquisition unit in a next processing cycle regardless of the interruption timing.
